# EUROPEAN PATENT SPECIFICATION

(11) **EP 1 557 115 B1**
(45) Date of publication and mention of the grant of the patent: **17.01.2007**
(21) Application number: 04425044.7
(22) Date of filing: 26.01.2004
(51) Int. Cl.: A47C 7/44

(54) **Chair with tiltable backrest**
Stuhl mit kippbarer Rückenlehne
Chaise avec dossier rabattable

(43) Date of publication of application: 27.07.2005
(73) Proprietor: Pro-Cord S.P.A., 40129 Bologna (IT)
(72) Inventor: Piretti, Giancarlo, 40137 Bologna (IT)
(74) Representative: Marchitelli, Mauro

(56) References cited:
- WO-A-91/03191
- US-A- 4 585 272
- US-A1- 2002 117 883
- US-B1- 6 533 352

## Description

The present invention relates to a chair with a rearwards tiltable backrest under a rearwards thrust applied by the user.

Very many types of chairs are known in which the backrest is tiltable rearwards and elastically returns to a resting position when the rearwards thrust applied by the user ceases. In most cases, the backrest is associated to a complex elastic return mechanism, provided with a high number of components.

U.S. Patent No. 4,585,272 discloses a chair that has a reclinable backrest formed by a series of at least three superimposed segments articulated together about respective substantially horizontal axes to define, in the reclined position of the backrest, an arcuate configuration with a curve substantially corresponding to that of the arched back of a user.

The object of the present invention is to provide a chair with tiltable backrest which is simple, comfortable and composed by a reduced number of components that can be assembled in simple and rapid fashion.

According to the present invention, said object is achieved by a chair having the characteristics set out in claim 1.

The features and the advantages of the chair according to the present invention shall become readily apparent from the detailed description that follows, provided purely by way of non limiting example, with reference to the accompanying drawings, in which:
Figure 1 is a perspective view of a first embodiment of a chair according to the present invention,
Figure 2 is a partial lateral, and partially sectioned, view of the chair of Figure 1,
Figure 3 is a partial section according to the line III-III of Figure 1,
Figure 4 is an exploded perspective view of the part designated by the arrow IV in Figure 1,

- Figure 5 is a perspective view of a second embodiment of a chair according to the present invention,
- Figure 6 is a partial lateral view of the chair of Figure 5,
- Figure 7 is a partial plan view, partially sectioned according to the arrow VII of Figure 5,
- Figures 8 and 9 are partial sections according to the lines VIII-VIII and IX-IX of Figure 7,
- Figure 10 is an exploded perspective view of the part designated by the arrow X in Figure 5.

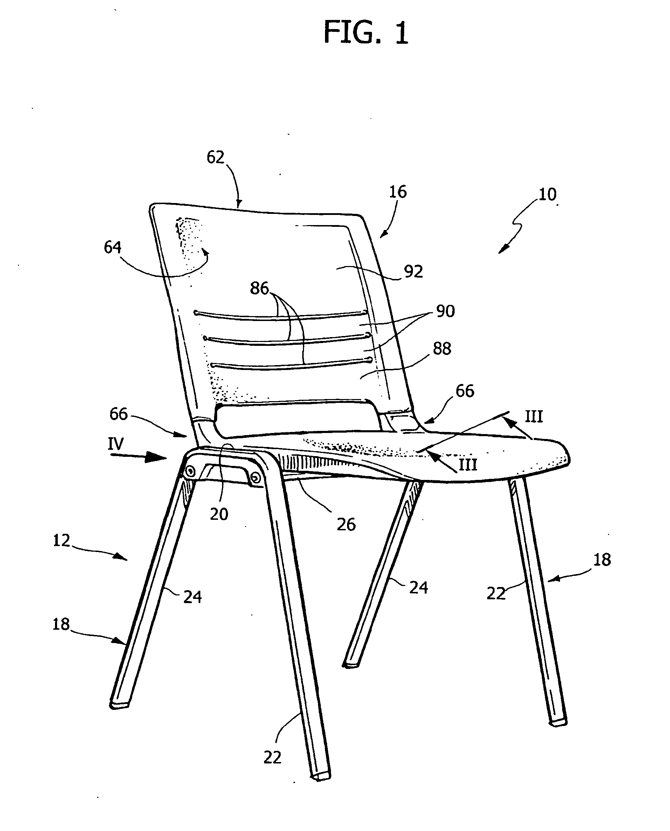

With reference to Figure 1, the number 10 designates a perspective view of a first embodiment of a chair according to the present invention. The chair 10 comprises a support structure 12 which bears a seat 14 and a backrest 16. The support structure 12 comprises, on each side of the chair, a metallic support 18 with a substantially inverted U shape, having an upper part 20, a forward inclined branch 22 forming a front leg and a rearward inclined branch 24 forming a rear leg.

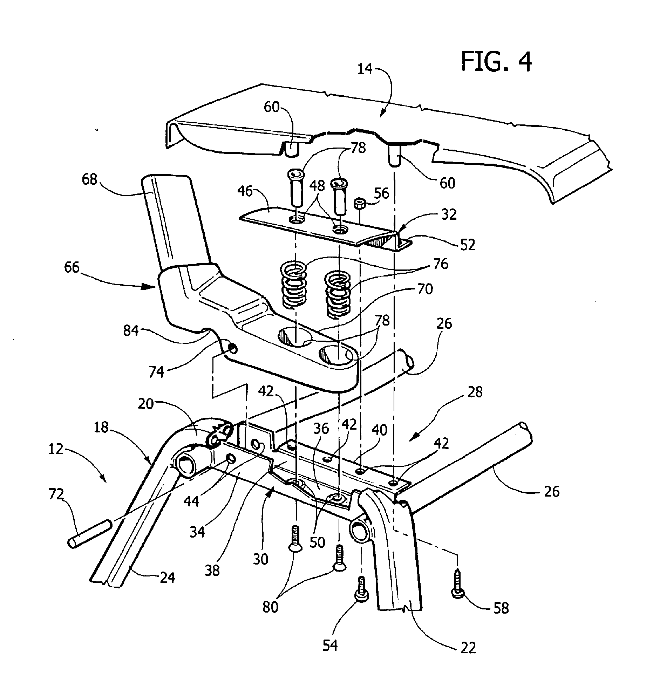

With reference in particular to Figure 4, the support structure 12 comprises two transverse elements 26 whose ends are fastened, for instance by welding, to the bent supports 18 forming the front legs 22 and rear legs 24 of the chair 10.

With reference to Figure 4, the support structure 12 further comprises, on each side of the chair, a box element 28 fastened between the ends of the transverse elements 26. In the embodiment illustrated in the Figures, the box element 28 comprises a base element 30 made of bent metal plate with a substantially channel shaped cross section, fastened to the base structure 12. For example, the base element 30 can be fastened by welding to the two transverse elements 26. The box element 28 comprises a closing element 32 fastened to the base element 30 and positioned to close the open upper side of the base element 30, in such a way as to form a closed box structure.

The base element 30 has an outer lateral wall 34, a bottom wall 36 and an inner lateral wall 38. The inner lateral wall 38 has a bent edge 40 provided with holes 42 with vertical axis. The two lateral walls 34, 38 are provided with two aligned holes 44 with horizontal axis.

The closing element 32 has a wall 36 facing the bottom wall 36 of the base element 30. The wall 46 has two holes 48 aligned to two holes 50 formed in the bottom wall 36 of the base element 30. The wall 46 has a bent edge 52 located close to the bent edge 40 of the base element 30. The closing element 32 is fastened to the base element by means of screws 54 which extend through aligned holes of the bent edges 40, 52 and which engage respective nuts 56.

The seat 14 is preferably constituted by a monolithic element made of plastic material, injection moulded and fastened to the support structure 12. In the example illustrated in Figures 1 through 4, the seat 14 is fastened to the bent edges 40, 52 of the two box elements 28, for instance by means of self-threading screws 58 which extend through holes of the bent edges 40, 52 and engage seats 60 integrally formed on the lower surface of the seat 14. Alternatively, the seat 14 could be fastened to a different component of the support structure 12, for instance to the transverse elements 26. As a further alternative, the seat could be movable relative to the base structure 12. For example, the seat could be oscillating relative to the base structure 12 around a transverse axis.

The backrest 16 comprises a bearing portion 62, preferably constituted by injection moulded plastic material, having a non planar bearing surface 64 against which bears the user's back. The backrest 16 comprises two connecting elements 66 which connect the bearing portion 62 of the backrest 16 to the support structure 12.

Each connecting element 66 is formed by a monolithic body, preferably constituted by metallic material, for example made of steel, aluminium or light alloy. Each connecting element 66 has a stem 68 which extends rearwards relative to the articulation pivot pin 72 and which is inserted with slight interference into a corresponding lateral seat of the bearing portion 62, so that the two connecting elements 66 are fixed relative to the bearing portion 62 of the backrest 16.

With reference in particular to Figure 4, each connecting element 66 has a reaction portion 70 which extends forwards relative to the articulation pivot pin 72 and is housed within the corresponding box element 28. The reaction portion 70 is articulated to the base element 30 around a transverse axis by means of a pivot pin 72 which engages the holes 44 of the lateral walls 34, 38 and a hole 74 of the reaction portion 70.

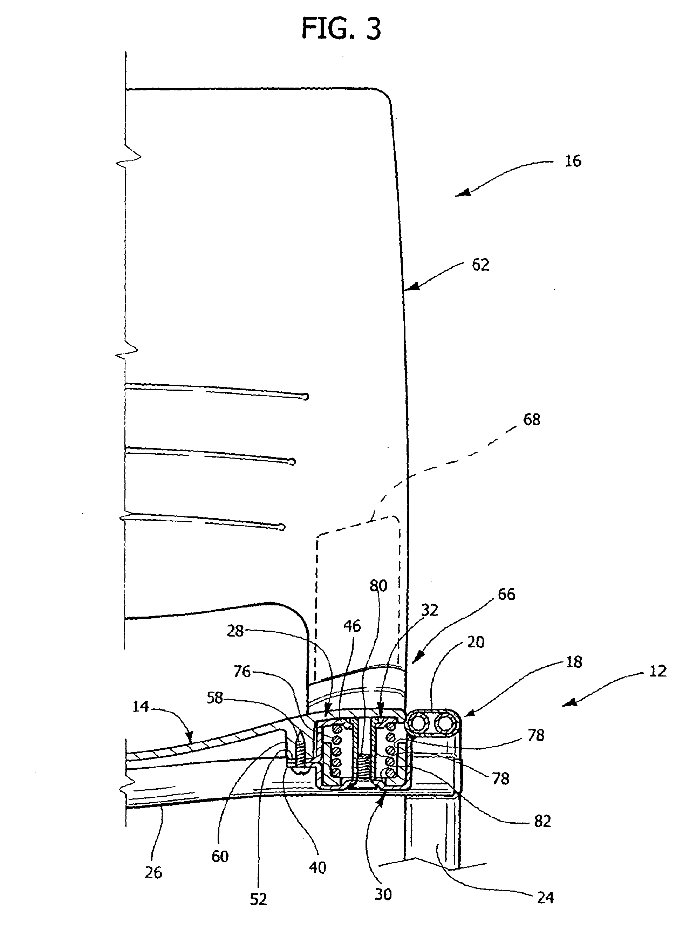

Each connecting element 66 is subject to the action of elastic means which tend to maintain the backrest 16 in a resting position and which contrast a rearwards thrust applied by the user against the bearing surface 64 of the backrest 16. In the embodiment illustrated by way of example in the figures, the elastic means are formed by two helical compression springs 76 interposed between the closing element 32 and the reaction portion 70. The springs 76 are housed within respective seats 78 of the reaction portion 70 and bear against the bottom walls of said seats. Preferably, within the springs 76 extend respective pivot pins 78 fastened between the wall 46 of the closing element 32 and the bottom wall 36 of the base element 30. The pivot pins 78 extend through the holes 48 of the wall 46 and are engaged by screws 80 which extend through the holes 50 of the bottom wall 36. As shown in Figure 3, the pivot pins 78 extend with play through respective holes 82 formed in the bottom walls of the seats 78 of the reaction portion 70.

As shown in Figure 4, each connecting element 66 is also provided on a lower surface thereof with a notch 84 which abuts against the rear transverse element 26 to form an end stop for the rearwards oscillation of the connecting element 66.

With reference to Figures 1 through 3, the bearing surface 64 of the backrest 16 has an arched shape with vertical generatrices. A backrest with this shape would be substantially non deformable relative to a transverse axis. The bearing surface 64 is provided with one or more weakened area 86 whose purpose is to make elastically deformable the bearing portion 62 of the backrest 16. In the illustrated example, the weakened areas extend in the transverse direction through the bearing surface 64. However, the weakened areas could have a different orientation relative to the transverse direction.

The or each weakened area 86 can be constituted by a through notch or by a groove with reduced thickness relative to the remaining part of the bearing portion 62. In the example illustrated in the figures, the bearing portion 62 of the backrest 16 is provided with three mutually parallel weakened areas 86, each of which is shaped as a transverse line which extends substantially over the whole width of the bearing surface 64 with the exception of the lateral edges of the backrest 16. The number of the weakened areas 86 may naturally vary according to the applications.

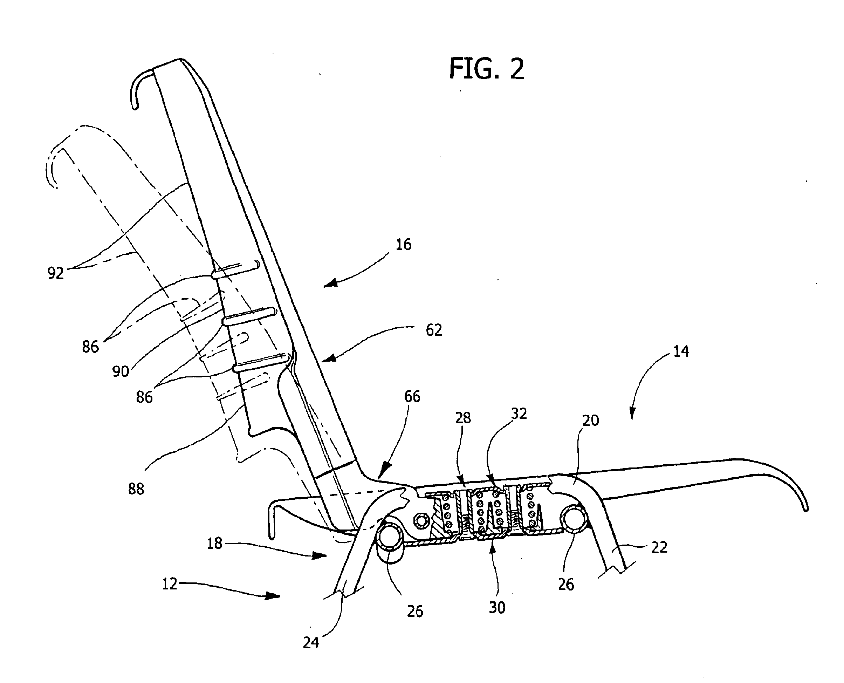

The three weakened areas 86 subdivide the bearing portion 62 of the backrest 16 into four sections: a lower section 88, two intermediate sections 90 and an upper section 92. Each weakened area 86 forms a hinge which allows a relative inclination between adjacent backrest sections. Each weakened area allows an elastic deformation of the bearing portion 62 under the action of a rearward thrust applied by the user, so that the bearing portion 62 as a whole can be deformed as shown with dashed and dotted line in Figure 2 relative to the non deformed configuration illustrated in the same figure with continuous line. When the rearwards thrust on the bearing portion 62 cease, the backrest sections 88, 90, 92 go back to their non deformed configuration thanks to the elastic return of the material.

Each weakened area 86 is intrinsically provided with an arrest which limits the maximum angle of relative inclination between the adjacent backrest sections. As shown in Figure 2, the maximum angle of relative inclination between two adjacent backrest sections is defined by the condition in which the rear edges of each weakened area 86 come in contact with each other. The height of each weakened area 86 therefore defines the maximum angle of rearwards inclination between the adjacent backrest sections.

In use, the backrest 16 is capable of tilting rearwards under the action of a thrust applied by the user. A part of the rearwards inclination of the backrest 16 is due to an oscillating motion of the connecting elements 66 relative to the support structure 12 around the axes of the pivot pins 72. Another part of the rearwards tilting motion of the backrest 16 is due to the deformation of the bearing portion 62 of the backrest 16. The oscillating motion of the bearing elements 66 is contrasted by the action of the springs 76 whilst the deformation of the bearing portion 62 is contrasted by the elasticity of the material. In a practical embodiment, the two components of the tilting motion of the backrest 16 have substantially the same amplitude, for instance the rearwards inclination of the bearing elements 66 allows an inclination of the backrest by about 9° and the deformation due to the relative inclination of the backrest sections 88, 90, 92 allows an additional inclination of about 9°. The combination of these two motions (inclination of the backrest 16 and deformation of the bearing portion 62 of the backrest 16) allows to obtain ideal conditions of comfort for the user.

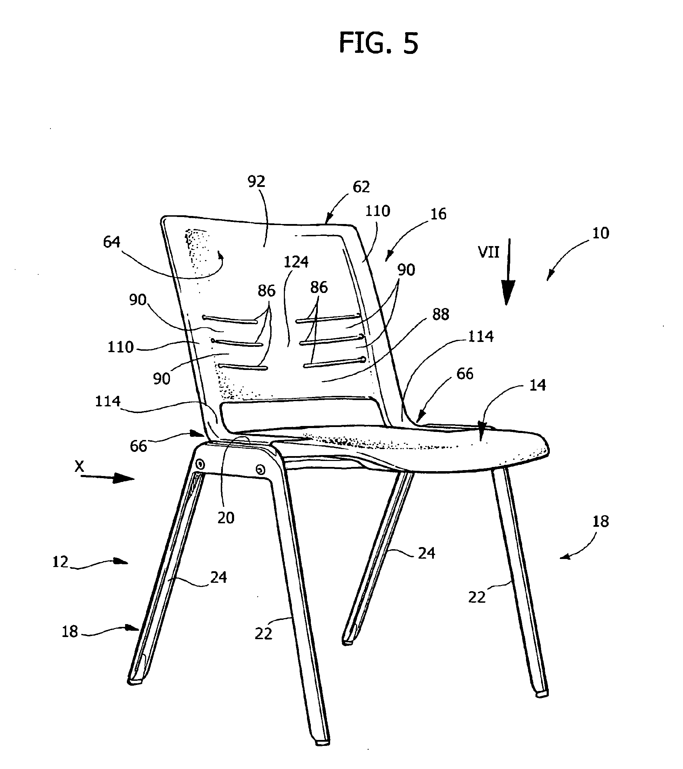

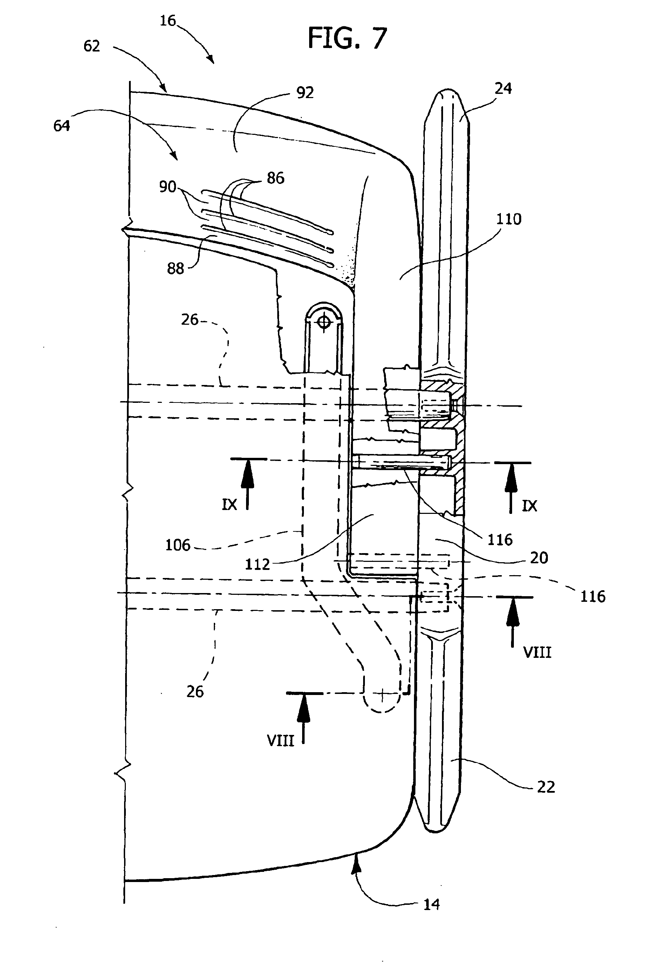

Figures 5 through 10 show a second embodiment of a chair according to the present invention. The details corresponding to those described above are designated by the same numeric references.

In this variant of the invention, the connecting elements 66 of the backrest 16 are integrally formed with the remaining part of the backrest 16 and are fastened to the support structure 12 instead of being oscillating relative to the support structure as in the previously described variation. The connecting elements 66 are elastically yielding and allow an inclination of the backrest by effect of an elastic deformation of a part thereof.

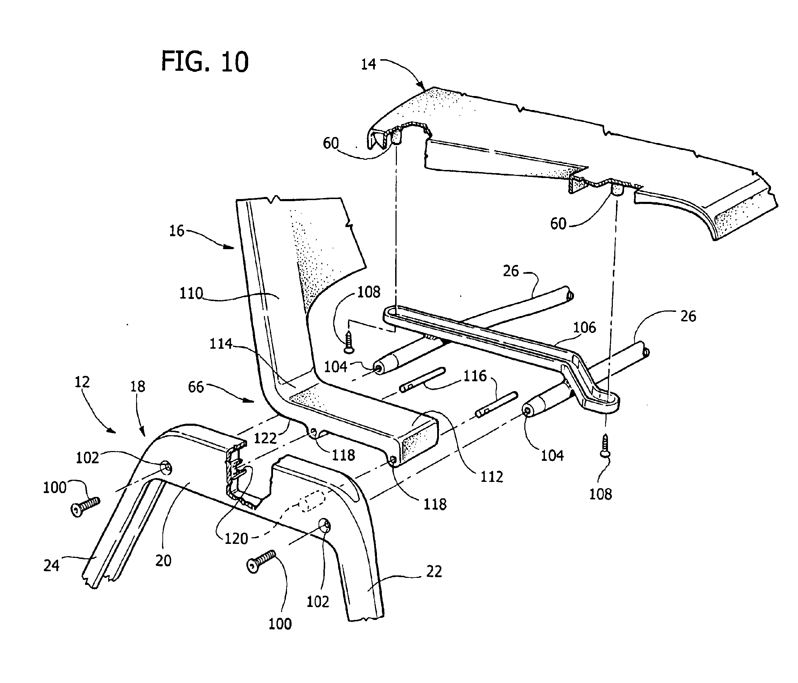

With reference in particular to Figure 10, the support structure 12 of the chair comprises two transverse elements 26 which are fastened at each of their ends to the upper part 20 of the corresponding support 18. In the illustrated example, transverse elements 26 are fastened to the supports 18 by means of horizontal screws 100 which extend through holes 102 of the upper part 20 of each support 18 and engage threaded holes 104 formed at the ends of the transverse elements 26.

With reference again to Figure 10, the support structure 12 comprises, on each side of the chair, a support element 106 fastened, for instance by means of welding, to the transverse elements 26. The seat 14 is fastened to the support elements 106 by means of screws 108.

The backrest 16, has at the two sides of the bearing surface 64, two relatively rigid 110 uprights preferably obtained in monolithic form with the remaining part of the bearing surface 64 by moulding of plastic material. Each upright 110 has a lower integral portion bent forwards in substantially L shape, forming a connecting element 66 for connecting the backrest 16 to the support structure 12.

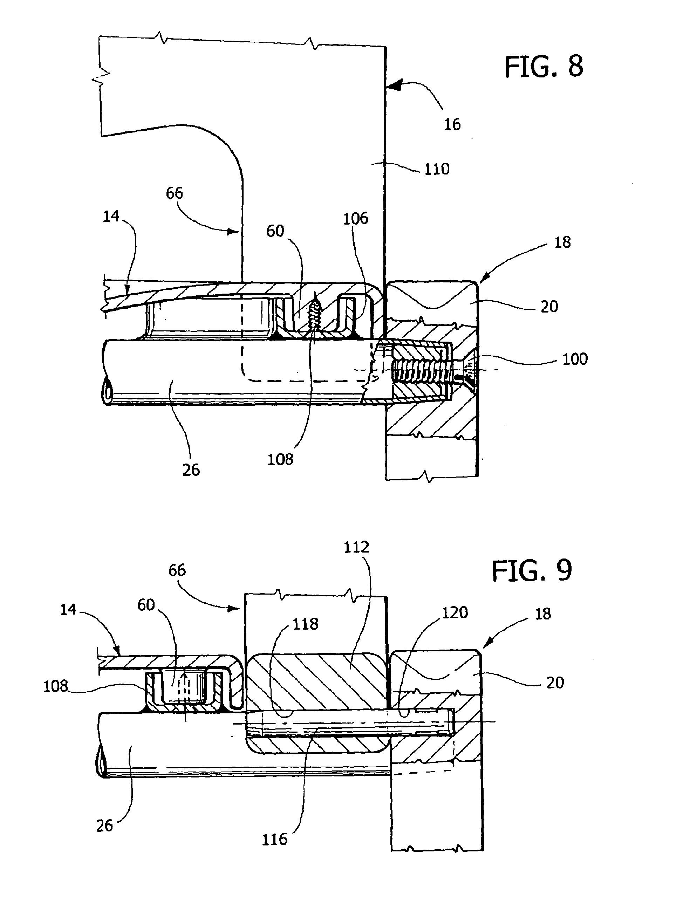

With reference in particular to Figure 10, each connecting element 66 has a horizontal fastening portion 112 which is joined to a corresponding upright 110 by an elastically yielding area 114. The horizontal fastening portion 112 of each connecting element 66 is fastened to the upper part 20 of the corresponding support 18. Preferably, said fastening is obtained by means of a pair of horizontal pivot pins 116 each of which engages a hole 118 of the horizontal fastening portion 112 and a hole 120 of the upper part 20 of the support 18 (see also Figure 9).

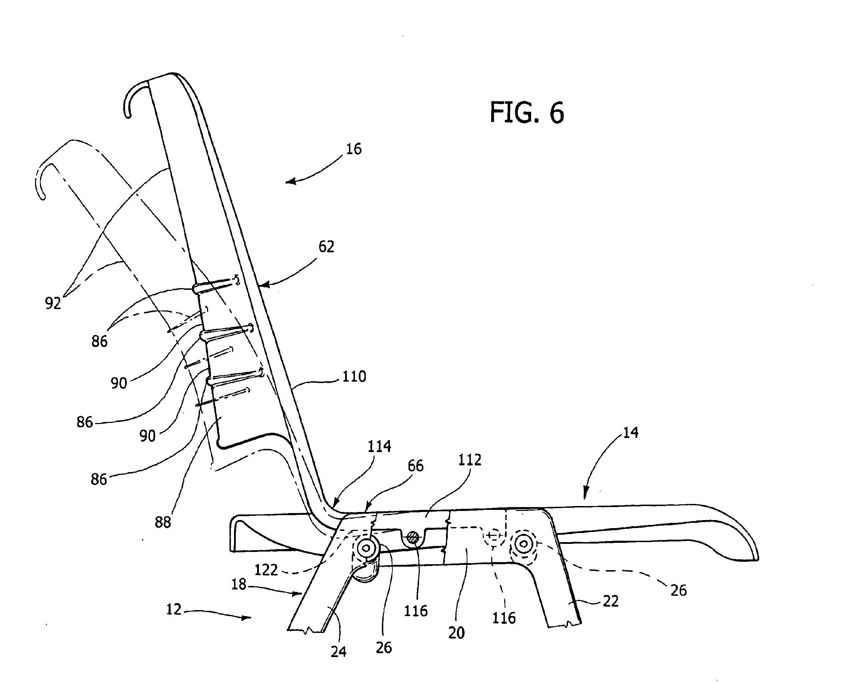

As shown in Figure 6, the elastically yielding junction portion 114 of each connecting element 66 allows a rearwards inclination of the respective upright 110 under the action of a rearwards thrust applied by the user on the backrest 16. The elastically deformable portion 114 has a lower surface 122 which is destined to come in arresting contact against the rear transverse element 26 to limit the rearwards inclination travel of the backrest 16.

As in the previously described embodiment, the bearing portion 62 of the backrest 16 is provided with weakened areas 86 which allow an elastic deformation of the bearing surface 64 as shown with dashed and dotted line in Figure 6. As shown in Figure 5, in this second embodiment the weakened areas 86 are formed by a plurality of transverse lines interrupted at the central part of the backrest, to leave a central area 124 of the bearing surface 64 that is not traversed by the weakened areas 86. The manner whereby the bearing portion 62 of the backrest 16 is deformed under the rearwards thrust applied by the user is identical to the one described previously. The presence of the central area 124 lacking weakened areas makes the bearing portion 62 stiffer.

From Figures 1 and 5 it is readily apparent that the structure of the chair 10 allows the vertical superposition of multiple chairs of the same type. The means which allow the rearwards inclination of the backrest 16 have very limited bulk in the vertical direction and do not limit the vertical superposition of the chairs in any way.

## Claims

1. A chair comprising:
a support structure (12) comprising two lateral supports (18) with a substantially inverted U shape, each having an upper part (20), a forward inclined branch (22) forming a front leg and a rearward inclined branch (24) forming a rear leg and two transverse elements (26) whose ends are fastened to said lateral supports (18);
a seat (14) carried by the support structure (12); and
a backrest (16),
**characterized in that** two box elements (28) each comprise a base element (30) made of bent metal plate with a substantially channel shaped cross section, fastened to a respective lateral support (18) between the ends of said transverse elements (26) and a closing element (32) fastened to the base element (30) and positioned to close an open upper side of the base element (30) so as to form a closed box structure, wherein the backrest (16) comprises an elastically deformable bearing portion (62) having a non-planar bearing surface (64) and fixed to two lateral connecting elements (66) which connect the bearing portion (62) to the support structure (12), each connecting element (66) having a reaction portion (70) which extends forwards relative to an articulation pivot pin (72) and is housed within the corresponding box element (28), the reaction portion (70) being articulated to said base element (30) around a transverse axis by means of the pivot pin (72) and being subject to action of elastic means (76) which tend to maintain the backrest (16) in a resting position and which contrast a rearwards thrust applied by the user against the bearing surface (64) of the backrest (16).

2. A chair as claimed in claim 1, **characterised in that** the bearing portion (62) of the backrest (16) is provided with at least one weakened area (86) which allows a relative elastic deformation between two adjacent backrest sections (88, 90, 92).

3. A chair as claimed in claim 2, **characterised in that** said weakened area (86) has the shape of a line which extends on a bearing surface (64) of the backrest (16).

4. A chair as claimed in claim 2, **characterised in that** said weakened area (86) comprises at least one through slot.

5. A chair as claimed in claim 2, **characterised in that** said weakened area (86) comprises at least one slot with reduced thickness.

6. A chair as claimed in claim 3, **characterised in that** said weakened area substantially extends over the whole length of the bearing surface (64) of the backrest (16).

7. A chair as claimed in claim 3, **characterised in that** the bearing surface (64) of the backrest (16) has a central area (124) which is not traversed by said weakened area (86).

8. A chair as claimed in claim 3, **characterised in that** it comprises a plurality of mutually parallel weakened areas (86).

9. A chair as claimed in claim 1, **characterised in that** the bearing portion (62) of the backrest (16) has a bearing surface (64) with an arched shape with vertical generatrices.

10. A chair comprising:
a support structure (12) comprising two lateral supports (18) with a substantially inverted U shape, each having an upper part (20), a forward inclined branch (22) forming a front leg and a rearward inclined branch (24) forming a rear leg and two transverse elements (26) whose ends are fastened to said lateral supports (18);
a seat (14) carried by the support structure (12); and
a backrest (16),
**characterized in that** the backrest comprises an elastically deformable bearing portion (62) having a non-planar bearing surface (64), two relatively rigid uprights (110) integrally formed at the lateral sides of the bearing surface (64), and two lateral connecting elements (66) integrally formed at the lower ends of said uprights (110), which connect the bearing portion (62) to the support structure (12), each connecting element (66) having a substantially L shape with a horizontal fastening portion (112) and an elastically yielding portion (114), the horizontal fastening portion (112) of each connecting element (66) being fastened to the upper part of a corresponding lateral support (18), wherein the elastically yielding portion (114) of each connecting element (66) allows a rearward inclination of the respective upright (110) under the action of a rearwards thrust applied by the user on the backrest (16).

## Patentansprüche

1. Stuhl, der umfasst:
eine Tragstruktur (12), die zwei seitliche Träger (18) mit einer im Wesentlichen umgekehrten U-Form, wobei jeder einen oberen Teil (20) aufweist, einen vorwärts geneigten Schenkel (22), der ein Vorderbein bildet, und einen rückwärts geneigten Schenkel (24), der ein Hinterbein bildet, und zwei Querelemente (26), deren Enden an den seitlichen Trägem (18) befestigt sind, umfasst;
einen Sitz (14), der von der Tragstruktur (12) getragen wird; und
eine Lehne (16);
**dadurch gekennzeichnet, dass** zwei Kastenelemente (28) jeweils ein Basiselement (30), das aus gekrümmter Metallplatte mit einem im Wesentlichen kanalförmigen Querschnitt hergestellt und an einem jeweiligen seitlichen Träger (18) zwischen den Enden der Querelemente (26) befestigt ist, und ein Schließelement (32), das an dem Basiselement (30) befestigt ist und zum Verschließen einer offenen oberen Seite des Basiselements (30) zum Bilden einer geschlossenen Kastenstruktur positioniert ist, umfassen, wobei die Lehne (16) einen elastisch verformbaren Lagerabschnitt (62) aufweist, der eine nichtebene Lagerfläche (64) aufweist und an zwei seitlichen Verbindungselementen (66), die den Lagerabschnitt (62) mit der Tragstruktur (12) verbinden, befestigt ist, wobei jedes Verbindungselement (66) einen Reaktionsabschnitt (70) aufweist, der sich vorwärts relativ zu einem Gelenkdrehzapfen (72) erstreckt und in dem entsprechenden Kastenelement (28) untergebracht ist, wobei der Reaktionsabschnitt (70) mit Hilfe des Drehzapfens (72) um eine Querachse herum gelenkig an dem Basiselement (30) angebracht ist und der Wirkung elastischer Einrichtungen (76) unterliegt, die dazu neigen, die Lehne (16) in einer Ruheposition zu halten, und die einem Rückwärtsschub, der von dem Benutzer gegen die Lagerfläche (64) der Lehne (16) angewendet wird, entgegenwirken.

2. Stuhl nach Anspruch 1, **dadurch gekennzeichnet, dass** der Lagerabschnitt (62) der Lehne (16) mit wenigstens einem geschwächten Bereich (86), der eine relativ elastische Verformung zwischen zwei benachbarten Lehnenabschnitten (88, 90, 92) ermöglicht, ausgestattet ist.

3. Stuhl nach Anspruch 2, **dadurch gekennzeichnet, dass** der geschwächte Bereich (86) die Form einer Linie, die sich auf einer Lagerfläche (64) der Lehne (16) erstreckt, aufweist.

4. Stuhl nach Anspruch 2, **dadurch gekennzeichnet, dass** der geschwächte Bereich (86) wenigstens einen Durchgangsschlitz umfasst.

5. Stuhl nach Anspruch 2, **dadurch gekennzeichnet, dass** der geschwächte Bereich (86) wenigstens einen Schlitz mit verringerter Dicke umfasst.

6. Stuhl nach Anspruch 3, **dadurch gekennzeichnet, dass** sich der geschwächte Bereich im Wesentlichen über die gesamte Länge der Lagerfläche (64) der Lehne (16) erstreckt.

7. Stuhl nach Anspruch 3, **dadurch gekennzeichnet, dass** die Lagerfläche (64) der Lehne (16) einen mittigen Bereich (124), der nicht von dem geschwächten Bereich (86) durchquert wird, aufweist.

8. Stuhl nach Anspruch 3, **dadurch gekennzeichnet, dass** er eine Vielzahl von zueinander parallelen geschwächten Bereichen (86) umfasst.

9. Stuhl nach Anspruch 1, **dadurch gekennzeichnet, dass** der Lagerabschnitt (62) der Lehne (16) eine Lagerfläche (64) mit einer gewölbten Form mit vertikalen Erzeugenden aufweist.

10. Stuhl, der umfasst:
eine Tragstruktur (12), die zwei seitliche Träger (18) mit einer im Wesentlichen umgekehrten U-Form, wobei jeder einen oberen Teil (20) aufweist, einen vorwärts geneigten Schenkel (22), der ein Vorderbein bildet, und einen rückwärts geneigten Schenkel (24), der ein Hinterbein bildet, und zwei Querelemente (26), deren Enden an den seitlichen Trägem (18) befestigt sind, umfasst;
einen Sitz (14), der von der Tragstruktur (12) getragen wird; und
eine Lehne (16);
**dadurch gekennzeichnet, dass** die Lehne einen elastisch verformbaren Lagerabschnitt (62) umfasst, der eine nichtebene Lagerfläche (64), zwei relativ starre Pfosten (110), die an den seitlichen Seiten der Lagerfläche (64) integral ausgebildet sind, und zwei seitliche Verbindungselemente (66), die an den unteren Enden der Pfosten (110) integral ausgebildet sind und die den Lagerabschnitt (62) mit der Tragstruktur (12) verbinden, aufweist, wobei jedes Verbindungselement (66) im Wesentlichen eine L-Form mit einem horizontalen Befestigungsabschnitt (112) und einem elastisch nachgebenden Abschnitt (114) aufweist, wobei der horizontale Befestigungsabschnitt (112) jedes Verbindungselements (66) an dem oberen Teil eines entsprechenden seitlichen Trägers (18) befestigt ist, wobei der elastisch nachgebende Abschnitt (114) jedes Verbindungselements (66) eine Rückwärtsneigung des jeweiligen Pfostens (110) unter der Wirkung eines Rückwärtsschubs, der von dem Benutzer auf die Lehne (16) angewendet wird, ermöglicht.

## Revendications

1. Chaise comprenant:
une structure de support (12) comprenant deux supports latéraux (18) avec une forme en U sensiblement inversé, chacun ayant une partie supérieure (20), une branche inclinée vers l'avant (22) formant un pied avant et une branche inclinée vers l'arrière (24) formant un pied arrière et deux éléments transversaux (26) dont les extrémités sont fixées auxdits supports latéraux (18),
un siège (14) porté par la structure de support (12), et
un dossier (16),
**caractérisée en ce que** deux éléments en caisson (28) comprennent chacun un élément de base (30) en tôle pliée avec une section transversale sensiblement en forme de canal, fixé à un support latéral (18) respectif entre les extrémités desdits éléments transversaux (26), et un élément de fermeture (32) fixé à l'élément de base (30) et positionné pour fermer un côté supérieur ouvert de l'élément de base (30) de manière à former une structure en caisson fermée, dans laquelle le dossier (16) comprend une partie d'appui (62) élastiquement déformable ayant une surface d'appui (64) non plane et fixée aux deux éléments de liaison (66) latéraux qui relient la partie d'appui (62) à la structure de support (12), chaque élément de liaison (66) ayant une partie de réaction (70) qui s'étend vers l'avant par rapport à un tourillon d'articulation (72) et qui est logée à l'intérieur de l'élément en caisson (28) correspondant, la partie de réaction (70) étant articulée audit élément de base (30) autour d'un axe transversal au moyen du tourillon (72) et étant soumise à l'action de moyens élastiques (76) qui tendent à maintenir le dossier (16) dans une position de repos et qui contrecarrent une poussée vers l'arrière appliquée par l'utilisateur contre la surface d'appui (64) du dossier (16).

2. Chaise selon la revendication 1, **caractérisée en ce que** la partie d'appui (62) du dossier (16) est munie d'au moins une zone affaiblie (86) qui permet une déformation élastique relative entre deux sections de dossier (88, 90, 92) adjacentes.

3. Chaise selon la revendication 2, **caractérisée en ce que** ladite zone affaiblie (86) a la forme d'une ligne qui s'étend sur une surface d'appui (64) du dossier (16).

4. Chaise selon la revendication 2, **caractérisée en ce que** ladite zone affaiblie (86) comprend au moins une fente passante.

5. Chaise selon la revendication 2, **caractérisée en ce que** ladite zone affaiblie (86) comprend au moins une fente d'épaisseur réduite.

6. Chaise selon la revendication 3, **caractérisée en ce que** ladite zone affaiblie s'étend sur toute la longueur de la surface d'appui (64) du dossier (16).

7. Chaise selon la revendication 3, **caractérisée en ce que** ladite surface d'appui (64) du dossier (16) a une zone centrale (124) qui n'est pas traversée par ladite zone affaiblie (86).

8. Chaise selon la revendication 3, **caractérisée en ce qu'**elle comprend une pluralité de zones affaiblies (86) parallèles entre elles.

9. Chaise selon la revendication 1, **caractérisée en ce que** la partie d'appui (62) du dossier (16) a une surface d'appui (64) qui a une forme arquée avec des génératrices verticales.

10. Chaise comprenant:
une structure de support (12) comprenant deux supports latéraux (18) avec une forme de U sensiblement inversé, chacun ayant une partie supérieure (20), une branche inclinée vers l'avant (22) formant un pied avant et une branche inclinée vers l'arrière (24) formant un pied arrière et deux éléments transversaux (26) dont les extrémités sont fixées auxdits supports latéraux (18),
un siège (14) porté par la structure de support (12), et
un dossier (16),
**caractérisée en ce que** le dossier comprend une partie d'appui (62) élastiquement déformable ayant une surface d'appui (64) non plane, deux montants (110) relativement rigides formés intégralement aux bords latéraux de la surface d'appui (64) et deux éléments de liaison (66) latéraux formés intégralement aux extrémités inférieures desdits montants (110), qui raccordent la partie d'appui (62) à la structure de support (12), chaque élément de liaison (66) ayant une forme sensiblement en L avec une partie de fixation horizontale (112) et une partie cédant élastiquement (114), la partie de fixation horizontale (112) de chaque élément de liaison (66) étant fixée à la partie supérieure d'un support latéral (18) correspondant, dans laquelle la partie cédant élastiquement (114) de chaque élément de liaison (66) permet une inclinaison vers l'arrière du montant (110) respectif sous l'action d'une poussée vers l'arrière appliquée par l'utilisateur sur le dossier (16).
